# EUROPEAN PATENT SPECIFICATION

(11) **EP 4 384 979 B1**
(45) Date of publication and mention of the grant of the patent: **18.12.2024**
(21) Application number: 22770040.8
(22) Date of filing: 08.08.2022
(51) Int. Cl.: G06T 7/00, G06N 3/0464, G06N 3/09, G06N 3/091

(54) **AUTOMATIC DETECTION AND DIFFERENTIATION/CLASSIFICATION OF THE ESOPHAGUS, STOMACH, SMALL BOWEL AND COLON LESIONS IN DEVICE-ASSISTED ENTEROSCOPY USING A CONVOLUTIONAL NEURONAL NETWORK**
AUTOMATISCHE ERKENNUNG UND DIFFERENZIERUNG/KLASSIFIZIERUNG VON LÄSIONEN DER SPEISERÖHRE, DES MAGENS, DES DÜNN- UND DICKDARMS BEI DER GERÄTEGESTÜTZTEN ENTEROSKOPIE MIT HILFE EINES NEURONALEN FALTUNGSNETZWERKS
DÉTECTION AUTOMATIQUE ET DIFFÉRENCIATION/CLASSIFICATION DES LÉSIONS DE L'OESOPHAGE, DE L'ESTOMAC, DE L'INTESTIN GRÊLE ET DU CÔLON LORS D'UNE ENTÉROSCOPIE ASSISTÉE PAR UN DISPOSITIF, À L'AIDE D'UN RÉSEAU NEURONAL CONVOLUTIF

(30) Priority: 09.08.2021 PT 2021117392
(43) Date of publication of application: 19.06.2024
(73) Proprietor: Digestaid - Artificial Intelligence Development, Lda., 4420-249 Gondomar (PT)
(72) Inventor: SOUSA FERREIRA, João Pedro, 4200-465 Porto (PT); DA QUINTA E COSTA DE MASCARENHAS SARAIVA, Miguel José, 4200-427 Porto (PT); CASAL CARDOSO, Hélder Manuel, 4420-429 Valbom GDM Gondomar (PT); GONÇALVES DE MACEDO, Manuel Guilherme, 4100-506 Porto (PT); RIBEIRO ANDRADE, Ana Patrícia, 4250-005 Porto (PT); LAGES PARENTE, Marco Paulo, 4200-465 Porto (PT); NATAL JORGE, Renato Manuel, 4200-465 Porto (PT); LIMA AFONSO, João Pedro, 4950-290 Mazedo Monção (PT); CARNEIRO RIBEIRO, Tiago Filipe, 4580-459 LORDELO PRD Lordelo (PT); MOREIRA SÁ CARDOSO, Pedro Marílio, 4440-681 Valongo (PT)
(74) Representative: Novaes, Francisco de
(86) International application number: PCT/PT2022/050024
(87) International publication number: WO 2023/018344

(56) References cited:
- WO-A1-2021/142449
- GAMAGE CHATHURIKA ET AL: "GI-Net: Anomalies Classification in Gastrointestinal Tract through Endoscopic Imagery with Deep Learning", 2019 MORATUWA ENGINEERING RESEARCH CONFERENCE (MERCON), IEEE, 3 July 2019 (2019-07-03), pages 66 - 71, XP033608826, ISBN: 978-1-7281-3631-8, [retrieved on 20190828], DOI: 10.1109/MERCON.2019.8818929
- REHMAN ARSHIA ET AL: "A deep learning based review on abdominal images", MULTIMEDIA TOOLS AND APPLICATIONS, KLUWER ACADEMIC PUBLISHERS, BOSTON, US, vol. 80, no. 20, 3 September 2020 (2020-09-03), pages 30321 - 30352, XP037564802, ISSN: 1380-7501, [retrieved on 20200903], DOI: 10.1007/S11042-020-09592-0
- ALDWGERI ATHER ET AL: "Ensemble of Deep Convolutional Neural Network for Skin Lesion Classification in Dermoscopy Images", 22 October 2019, ARXIV.ORG, CORNELL UNIVERSITY LIBRARY, 201 OLIN LIBRARY CORNELL UNIVERSITY ITHACA, NY 14853, PAGE(S) 214 - 226, XP047531951
- SALEEM MUHAMMAD HAMMAD ET AL: "Plant Disease Classification: A Comparative Evaluation of Convolutional Neural Networks and Deep Learning Optimizers", PLANTS, vol. 9, no. 10, 6 October 2020 (2020-10-06), pages 1319, XP093000138, ISSN: 2223-7747, DOI: 10.3390/plants9101319
- NGUON LEANG SIM ET AL: "Deep Learning-Based Differentiation between Mucinous Cystic Neoplasm and Serous Cystic Neoplasm in the Pancreas Using Endoscopic Ultrasonography", DIAGNOSTICS, vol. 11, no. 6, 8 June 2021 (2021-06-08), CH, pages 1052, XP055982929, ISSN: 2075-4418, DOI: 10.3390/diagnostics11061052

## Description

### Background of the invention

The present invention relates to the lesion detection and classification in medical image data. More particularly, to the automated identification of esophagus, stomach, small bowel and colon lesions in medical images or videos obtained with the device-assisted enteroscopy, assessment of the lesion seriousness and subsequent medical treatment.

Device-assisted enteroscopy is an important exam for the diagnostic and therapeutic approach of the gastrointestinal tract, particularly of the small bowel. Enteroscopy allows in-depth exploration of the small bowel, enabling tissue sampling and the application of endoscopic therapy. The application of artificial intelligence (AI) algorithms to different endoscopic techniques has provided promising results. Convolutional Neuronal Networks (CNN) are a highly efficient multi-layered artificial intelligence architectures designed for image analysis. The application of these tools for automatic detection of lesions in device-assisted enteroscopy has not been thoroughly explored. The present invention discloses CNN-based method for the automatic detection and differentiation of clinical relevant lesions in the esophagus, stomach, small bowel and colon in enteroscopy exams.

Medical image visualization software allows clinicians to measure and report functional or anatomical characteristics on the medical image regions. Acquisition, processing, analysis, and medical image data storage play an essential role in diagnosing and treating patients. A medical imaging workflow and devices involved are configured, monitored, and updated throughout the operation of the medical imaging workflow and tools. Machine learning can help configure, monitor, and update the medical imaging workflow and devices.

Machine learning techniques can be used to classify an image. Deep learning uses algorithms to model high-level abstractions in data using a deep graph with multiple processing. Using a multilayered architecture, machines employing deep learning techniques process raw data to find groups of highly correlated values or distinctive themes.

Document WO2017042812(A2) shows a system to detect polyps in endoscopic procedures. Document WO2017042812(A2) presents a method that uses trained model for image classification in endoscopy. The present invention presents a method to train supervised classification models fast. The trained models can be applied, for example, in the processes of claim 1. (ix) of the WO2017042812(A2).

Document WO2020256568(A1) discloses a system to detect anatomical landmarks in endoscopic videos using trained image classifiers models. The present invention apply a training method for image classification models and therefore a platform to deploy trained models applied on endoscopic image classification systems.

Document CN111091559(A) presents a system to detect lymphomas under enteroscopy in realtime. The method applied trained model of object detection and classification. The invention does not apply optimized training sessions for image classification and does not classify images according to the present invention. Gastrointestinal lesions such as blood or hematic traces, ulcers/erosions, vascular lesions and protruding lesions, are currently one of the most common diseases and very often, when not correctly detected and treated, these may evolve into cancer or to a unfavorable clinical outcome such as gastrointestinal bleeding or inflammatory bowel disease.

Gamage et al.: "GI-Net: Anomalies Classification in Gastrointestinal Tract through Endoscopic Imagery with Deep Learning", 2019 Moratuwa Engineering Research Conference (MERCON), IEEE, 3 July 2019, pages 66-71 describes a convolutional neural network for anomalies classification in the gastrointestinal tract using endoscopy images. The document discloses the usage of different network architectures and achieves remarkable accuracy in predicting eight-class anomalies.

Rehman et al.: "A deep learning based review on abdominal images", Multimedia Tools and Applications, Kluwer Academic Publishers, Boston, US, vol. 80, no. 20, 3 September 2020, pages 30321-30352 describes Multiple deep learning approaches to classification or segmentation of medical abdominal images. Features are extracted from the images using different convolutional architectures, but none specifically directed towards enteroscopic imaging of the gastrointestinal track.

WO 2021/142449 A1 describes a deep learning method of determining a clinical value for an individual based on a tumor in an image by training a classifier to the lymphocyte distribution to identify the tumor.

Endoscopic images, due to the nature of their acquisition, often lack the light or other photographic conditions to allow the classification of esophagus, stomach, small bowel and colon straightforwardly executed. Within this context, machine learning techniques have been presented to automatically execute such task but up-to-date they have failed to present overall accuracy or false-negative rate that can be used in clinical practice and hence leads to inappropriate treatment

### Brief summary of the invention

The present invention discloses a method for deep learning based detection and classification of esophagus, stomach, small bowel and colon lesions such as blood or hematic residues, ulcers and erosions, pleomorphic protruding and vascular lesions in device-assisted enteroscopy images and exam input video examination images and indirectly measuring inflammatory activity. Indeed, the gold standard for assessing bowel inflammatory activity is the direct visualization of the bowel mucosa. The automatic identification of lesions, blood or hematic residues, small bowel ulcers and erosions, small bowel protruding, and vascular lesions is vital to detect esophageal, gastric, enteric and colonic lesions, crucial for diagnosis and treatment planning.

By using trained convolutional layers of different architectures on the ImageNet¹ dataset and further testing them using sample of the device-assisted enteroscopy image stack, the potential to detect lesions is shown. The disruptive clinical nature of the present invention is justified by the artificial intelligence system's ability to detect pleomorphic luminal and mucosal lesions, particularly blood or hematic residues, ulcers and erosions, protruding and vascular lesions. Indeed, this novel neuronal network AI based approach, capable to automatically identify lesions of subtle pleomorphic nature, is of the utmost importance in clinical practice, allowing a complete identification of esophageal, stomach, small bowel and colon lesions in images obtained with the device-assisted enteroscopy diagnosis. Furthermore, the specific application of a tailor-made artificial intelligence system to device-assisted enteroscopy is a relevant novelty introduced by this invention to the current state of the art. One of the most critical and frequent indications for performing device-assisted enteroscopy is inflammatory bowel disease and gastrointestinal bleeding. Correct assessment of blood or hematic residues, ulcers and erosions, protruding and vascular lesions in the device-assisted enteroscopy findings is vital for clinical follow-up management. Therefore, by accurately identifying blood or hematic residues, ulcers and erosions, protruding and vascular lesions in device-assisted enteroscopy, the present invention helps the clinical team better define the diagnostic and therapeutic management of the patient, which may translate into optimized clinical outcomes.

Indeed, the clinical relevance of the developed model lies in its ability to not only detect but classify esophageal, stomach, small bowel and colon lesions in device-assisted enteroscopy.

The present invention detects relevant blood or hematic residues, ulcers and erosions, protruding and vascular lesions in device-assisted enteroscopy images/videos. Ulcers and erosions identification in device-assisted enteroscopy is vital to assess inflammatory gastrointestinal activity. Furthermore, the invention uses transfer learning and semi-active learning. Transfer learning allows feature extraction and high-accuracy classification using reasonable datasets sizes. The semi-active implementation allows a continuous improvement in the classification system.A system such as this can embark a multitude of categories with clinical relevance. Furthermore, the invention preferably uses transfer learning for feature extraction of device-assisted enteroscopy images with overall accuracy reaching 95% and employs a semi-active learning strategy for device-assisted enteroscopy images.

In one embodiment of the method splits the dataset into a number of stratified folds, where images relative to a given patient are included in one-fold only. Further, additionally or alternatively, such data is trained and validated with patient grouping to a random fold, i.e., images from an arbitrary patient are ensured to belong to one and one only fold.

Preferred is a method which uses the chosen training and validation sets to further train a series of network architectures, which include, among others, a feature extraction, and a classification component. The series of convolutional neuronal networks to train include but are not limited to: VGG16, InceptionV3, Xception EfficientNetB5, EfficientNetB7, Resnet50, and Resnet125. Preferably, their weights are frozen, with exception to the BatchNormalization layers, and are coupled with a classification component. The classification component comprises at least two dense layers, preferably of sizes 2048 and 1024, and at least one dropout layer of preferably 0.1 in between them.

Alternatively, but not preferentially, the classification component can be used with more dense layers or with dense layers of different size. Alternatively, but not preferentially, the classification component can also be used without dropout layers.

Further, additionally, and preferably, the best performing architecture is chosen according to the overall accuracy f1-metrics and sensitivity. Performance metrics include but are not limited to the f1-metrics accuracy. Further, the method is not limited to two to four dense layers in sequence, starting with 4096 and decreasing in half up to 512. Between the final two layers there is a dropout layer of 0.1 drop rate.

Lastly, the best performing solution is trained using the complete dataset with patient grouping.

Further embodiments of the present invention may include similar classification networks, training weights and hyperparameters.

These may include the usage of any image classification network, new or not yet designed.

In general, the method includes two modules: prediction and output collector. Prediction reads videos and flags images with findings. Conversely, the output collector passes these images with findings for processing.

Examples of advantageous effects of the present invention include: training using parameters from machine learning results of cloud-based every-day increasing datasets; automatic prediction of the device-assisted enteroscopy image by using a deep learning method so that the esophageal, stomach, small bowel and colon lesions from image input of the device-assisted enteroscopy can be identified and classified into blood or hematic residues, ulcers and erosions, protruding and vascular lesions; the usage of transfer learning improves the image classification speed and corresponding classification accuracy.

### Brief description of the drawings

FIG. 1 illustrates a method for detection of esophageal, stomach, small bowel and colon lesions in device-assisted enteroscopy according to an embodiment of the present invention.
FIG. 2 illustrates the method for automatic detection and differentiation of esophageal, stomach, small bowel and colon lesions in device-assisted enteroscopy exam.
FIG. 3 illustrates the major processes for automatic detection and differentiation of esophageal, stomach, small bowel and colon lesions in device-assisted enteroscopy exam.
FIG. 4 illustrates the structure of the classification network to distinguish according to lesion classification.
FIG. 5 depicts an embodiment of the classification network to classify according to lesion classification.

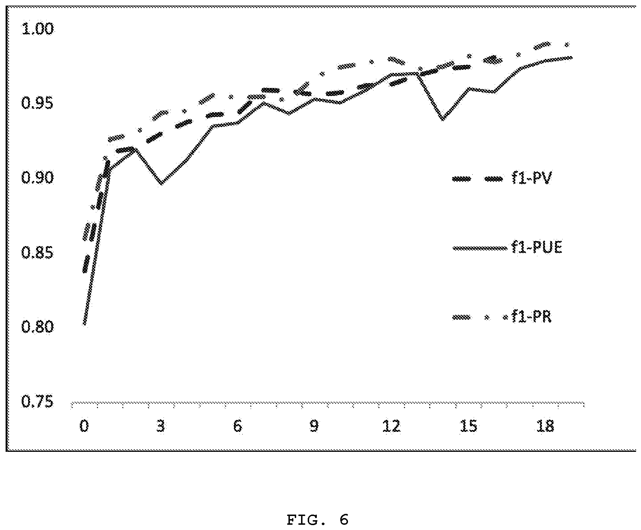

FIG. 6 illustrates a preferable embodiment of the present invention where the accuracy f1-metrics curves for the training on a small subset of images and labelled data are shown. Example of results from an iteration of method 8000.
FIG. 7 illustrates exemplary accuracy loss curves during training on a small subset of images and labelled data and according to an embodiment of the present invention. Example of results from an iteration of method 8000.
FIG. 8 illustrates exemplary ROC curves and AUC values obtained after training on a small subset of images and labelled data according to an embodiment of the present invention. Results used for model selection. Example of results from an iteration of method 8000, and a zoom of the ROC curves.
FIG. 9 illustrates an exemplary confusion matrix after training on a small subset of images and labelled data according to an embodiment of the present invention. Results used for model selection. Number of images of the small subset of data and respective class proportion between parentheses.
FIG. 10 illustrates examples of lesion classification according to an embodiment of the present invention.
FIG. 11 illustrates a result of performing deep learning-based lesion classification on the data volume 240 and 250, according to an embodiment of the present invention.
FIG. 12 illustrates an example of a classified lesion waiting for expert confirmation.

### Detailed description

The present invention discloses a method capable of identify and differentiate esophageal, stomach, small bowel and colon classifying in images/videos acquired during a device-assisted enteroscopy medical procedure.

Some preferential embodiments will be described in more detail with reference to the accompanying drawings, in which the embodiments of the present disclosure have been illustrated. However, the present disclosure can be implemented in various manners, and thus should not be construed to be limited to the embodiments disclosed herein.

It is to be understood that although this disclosure includes a detailed description on cloud computing, implementation of the teachings recited herein are not limited to a cloud computing environment. Rather, embodiments of the present invention are capable of being implemented in conjunction with any other type of computing environment now known or later developed.

The term "deep learning" is a machine learning technique that uses multiple data processing layers to classify the data sets with high accuracy. It can be a training network (model or device) that learns based on a plurality of inputs and outputs. A deep learning network can be a deployed network (model or device) generated from the training network and provides an output response to an input.

The term "supervised learning" is a deep learning training method in which the machine is provided with already classified data from human sources. In supervised learning, features are learned via labeled input.

The term "convolutional neuronal networks" or "CNNs" are networks that interconnect data used in deep learning to recognize objects and regions in datasets. CNNs evaluate raw data in a series of stages to assess learned features.

The term "transfer learning" is a machine storing the information learned when attempting to solve one problem to solve another problem of similar nature as the first.

The term "semi-active learning" is used as a process of machine learning. Before executing the next learning process, the training network appends a set of labeled data to the training dataset from a trusted external entity. For example, as a machine collects more samples from specialized staff steps, the less prone it is to mispredict images of identical characteristics.

The term "computer-aided diagnosis" refers to machines that analyze medical images to suggest a possible diagnosis.

The term "protruding lesions" refers to pleomorphic group of lesions, containing polyps, nodules, subepithelial lesions as well as gastrointestinal tumors.

The term "vascular lesions" refer to pleomorphic group of vascular lesions with different hemorrhagic potential, such as red spots, angioectasias and varices.

The terms "ulcers and erosions" refer to mucosal breaks in the mucosa of the gastrointestinal tract. These lesions are distinguished based on estimated size and depth of penetration. "Ulcers" were defined as a depressed loss of epithelial covering, with a whitish base and surrounding swollen mucosa with > 5 mm of diameter. Conversely, mucosal erosions were defined as a minimal loss of epithelial layering surrounded by normal mucosa.

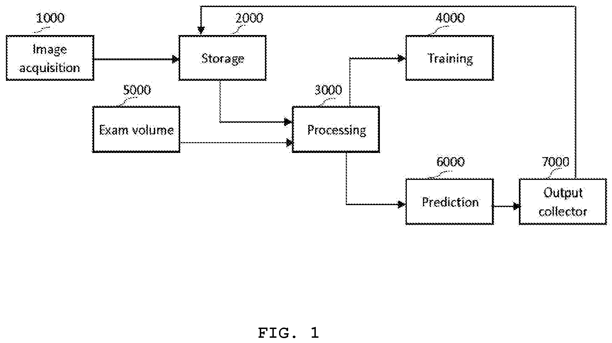

The present invention relates to a method for deep learning-based method for the detection and classification of blood or hematic residues, ulcers and erosions, protruding and vascular lesions in device-assisted enteroscopy images/video (Fig 1). Often, embodiments of the present invention provide a visual understanding of the deep learning blood or hematic residues, ulcers and erosions, protruding and vascular lesions detection method. Automatic lesion classification of esophageal, stomach, small bowel and colon images/videos in device-assisted enteroscopy is a challenging task due to the pleomorphic nature of the lesions, and its hemorrhagic and neoplastic potential. Large variations in the gastrointestinal tract preparation before device assisted enteroscopy further complicate automated gastrointestinal lesion classification. Although the automatic training and classification times are fast (on average 10 seconds for a test dataset of 2000 images), the output is not satisfactory for a fast diagnosis by the experts.

The method comprises an image acquisition module, a storage module, a training input module, a processing module, an exam input module, a training module, a prediction module, an output collector module and a display module.

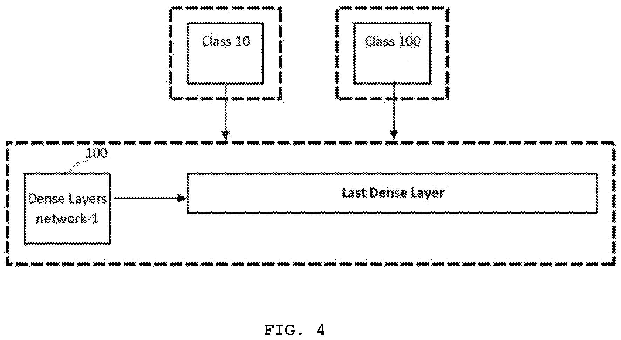

The image acquisition module 1000 receives exam input volumes from device-assisted enteroscopy providers. Images and corresponding labels are loaded onto the storage module 2000. The storage module 2000 includes a multitude of classification network architectures 100, trained convolutional network architectures 110 and hyperparameters for training. The storage module 2000 can be a local or cloud server. The storage module contains training input labelled data from device-assisted enteroscopy images and the required metadata to run processing module 3000, training module 4000, prediction module 5000, a second prediction module 6000, and output collector module 7000. The input labelled data includes, but not exclusively, images and corresponding lesion classification. The input labelled data also includes anonymized tags of both provider and patient, and image size. The metadata includes a multitude of classification networks architectures 100 exemplified in FIG. 4, a multitude of trained convolutional neuronal networks architectures 110, training hyperparameters, training metrics, fully trained models, and selected fully trained models.

Images 1000 and labelled data are processed at the processing module 3000 before running the optimized training at the training module 4000. The processing module normalizes the images according to the deep model architecture, to be trained at the processing module 3000 or evaluated at training module 4000. By manual or scheduled request, the processing module normalizes the images at the storage module 2000 according to the deep model architectures that will run at training module 4000. All normalization procedure clean text annotation artifacts, center the region of interest, resize the image, and normalize the image pixels (between 0 and 1 or -1 and 1). Additionally, the processing module generates the data pointers to the storage module 2000 to form the partial or full images and ground-truth labels required to run the training module 3000. To prepare each training session, a dataset is divided into folds, where patient-specific imagery is exclusive to one and one fold only, for training and testing. The training set is split for model training to generate the data pointers of all the images and ground-truth labels, required to run the training process 9000. K-fold is applied with stratified grouping by patient in the training set to generate the data pointers of the partial images and ground-truth labels, required to run the model verification process 8000 of the training module 4000. The split ratios and number of folds are available at the metadata of the storage module. Operators include but are not limited to users, a convolutional neuronal network trained to optimize the k-fold or a mere computational routine. Merely as an example, the dataset is divided with patient split into 90% for training and 10% for testing. Optionally, images selected for training can be split into 80% for training and 20% for validation during training. A 5-fold with stratified grouping by patient is applied in the images selected for training. By manual or scheduled request, the processing module normalizes the exam volume data 5000 according to the deep model architecture to run at the prediction module 6000.

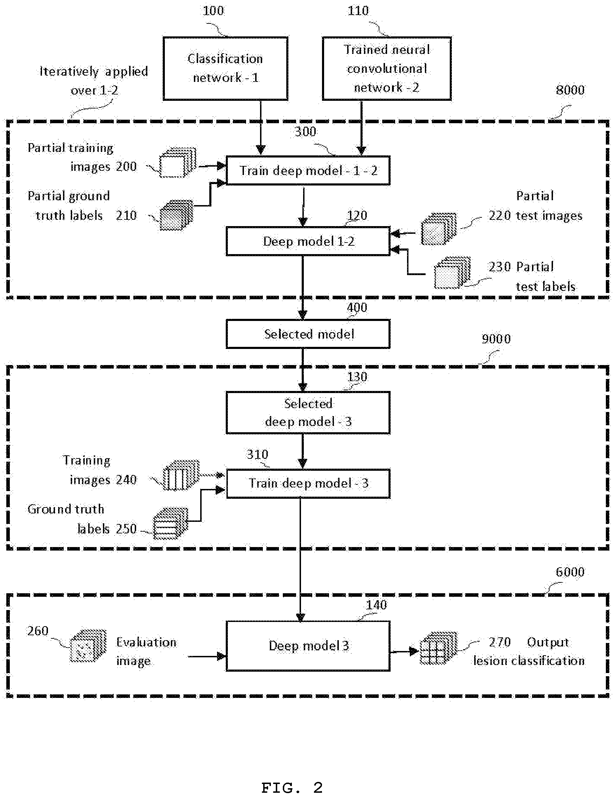

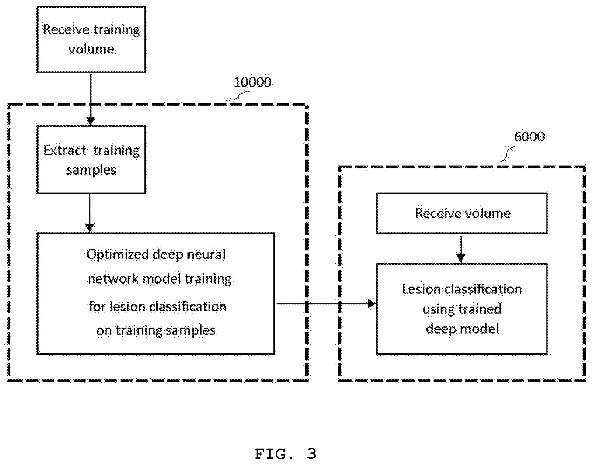

As seen in Fig 2, the training module 4000 has a model verification process 8000, a model selection step 400 and a model training step 9000. The model verification part iteratively selects combinations of classification architectures 100 and convolutional networks 110 to train a deep model for esophageal, stomach, small bowel and colon lesion classification. The classification network 100 has Dense and Dropout layers to correctly classify esophageal, stomach, small bowel and colon lesions. A neuronal convolutional network 110 trained on large datasets is coupled to the said classification network 100 to train a deep model 300. Partial training images 200 and ground-truth labels 210 train the said deep model 300. The performance metrics of the trained deep model 120 are calculated using a plurality of partial training images 220 and ground-truth labels 230. The model selection step 400 is based on the calculated performance metrics, such as f-1. The model training part 9000 trains the selected deep model architecture 130, at process 310, using the entire data of training images 240 and ground-truth labels 250. At the prediction module 6000, the trained deep model 140 outputs esophageal, stomach, small bowel and colon lesion classification 270 from a given evaluation image 260. An exam volume of data 5000 comprising the images from the device-assisted enteroscopy is the input of the prediction module 6000. The prediction module 6000 classifies image volumes of the exam volume 5000 using the best-performed trained deep model from 4000 (see Fig 3) . An output collector module 7000 receives the classified volumes and load them to the storage module after validation by another neuronal network or any other computational system adapted to perform the validation task.

Merely as exemplificative, the invention comprises a server containing training images for architectures in which initial parameters were obtained from training in large cloud-based large datasets such as, but not only, ImageNet, ILSVRC, and JFT. The architecture variant include VGG, ResNet, Inception, Xception or Mobile, EfficientNets. All data and metadata can be stored in a cloud-based solution or on a local computer. Embodiments of the present invention also provide various approaches to make a faster deep model selection. FIG. 2 illustrates a method for deep learning esophageal, stomach, small bowel and colon lesion classification according to an embodiment of the present invention. The method of FIG. 2 includes a pretraining stage 8000 and a training stage 9000. The training stage 8000 is performed with early stopping on small subsets of data to select the best-performed deep neuronal network for esophageal, stomach, small bowel and colon lesion classification among multiple combinations of convolution and classification parts. For example, a classification network of two dense layers of size 512 is coupled with the Xception model to train on a random set resulting from k-fold cross validation with patient grouping. Another random set is selected as the test set.

The process of training 8000 with early stopping and testing on random subsets is repeated in an optimization loop for combinations of (i) classification and transfer-learned deep neuronal networks; (ii) training hyperparameters. The image feature extraction component of the deep neuronal network is any architecture variant without the top layers accessible from the storage module. The layers of the feature extraction component remain frozen but are accessible at the time of training via the mentioned storage module. The BatchNormalization layers of the feature extraction component are unfrozen, so the system efficiently trains with device-assisted enteroscopy images presenting distinct features from the cloud images. The classification component has at least two blocks, each having, among others, a Dense layer followed by a Dropout layer. The final block of the classification component has a BatchNormalization layer followed by a Dense layer with the depth size equal to the number of lesions type one wants to classify.

The fitness of the optimization procedure is computed to (i) guarantee a minimum accuracy and sensitivity at all classes, defined by a threshold; (ii) minimize differences between training, validation, and test losses; (iii) maximize learning on the last convolutional layer. For example, if training shows evidence of overfitting, a combination of a shallow model is selected for evaluation.

The training stage 9000 is applied on the best performed deep neuronal network using the whole dataset.

The fully trained deep model 140 can be deployed onto the prediction module 6000. Each evaluation image 260 is then classified to output a lesion classification 270. The output collector module has means of communication to other systems to perform expert validation and confirmation on newly predict data volumes reaching 270. Such means of communication include a display module for user input, a thoroughly trained neuronal network for decision making or any computational programmable process to execute such task. Validated classifications are loaded on the storage module to become part of the datasets needed to run the pipelines 8000 and 9000, either by manual or schedule requests.

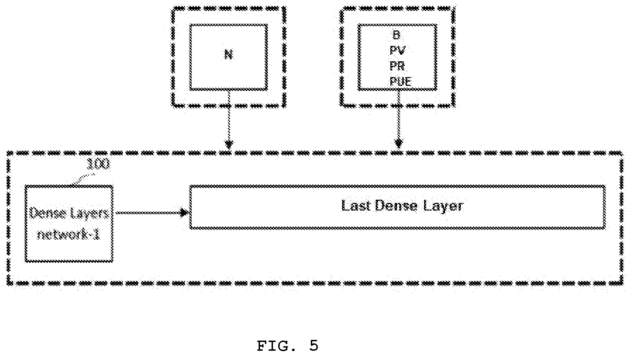

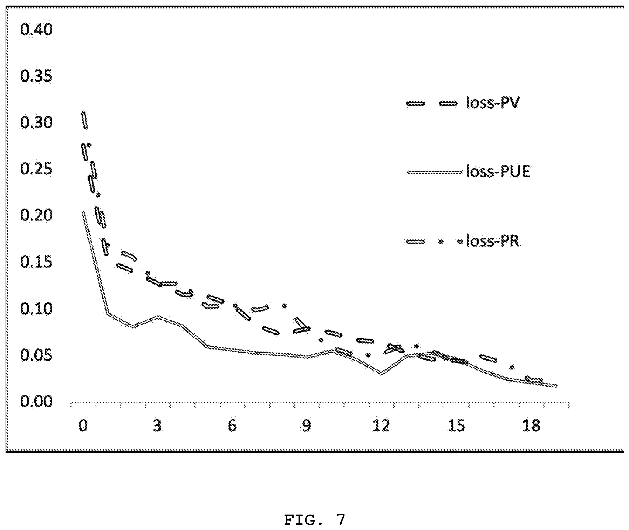

An embodiment of the classification network 100, as seen in Fig 5, can classify according to the gastrointestinal lesions identification as N: normal; B: blood; PV: vascular lesions; PR: protruding lesions; PUE: ulcers or erosions; are shown and grouped accordingly. At a given iteration of method 8000 (Fig 7, 8, and 9), the optimization pipeline described herein uses accuracy curves, ROC curves and AUC values and confusion matrix from training on a small subset of images and labelled data.

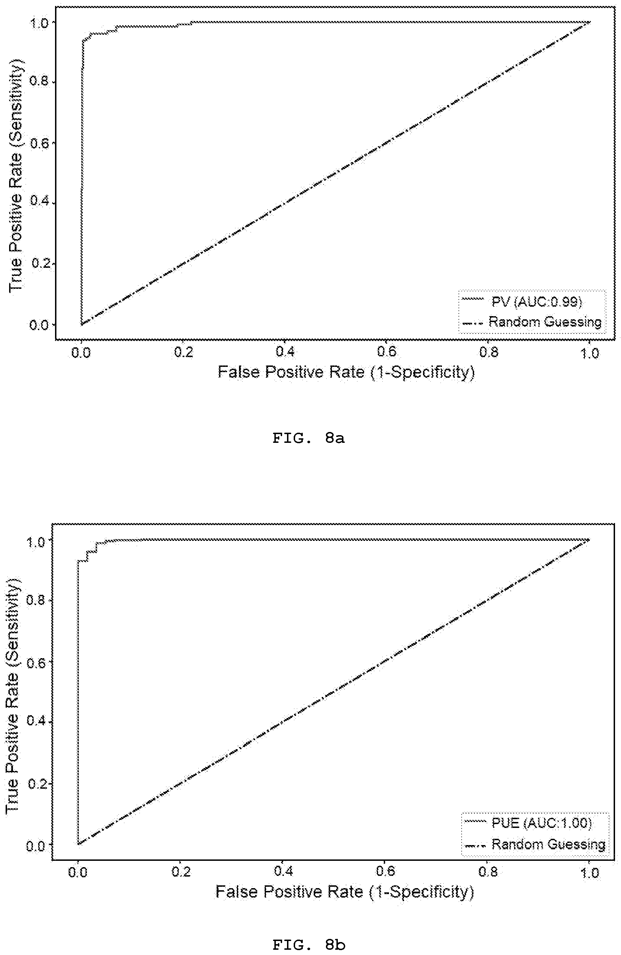

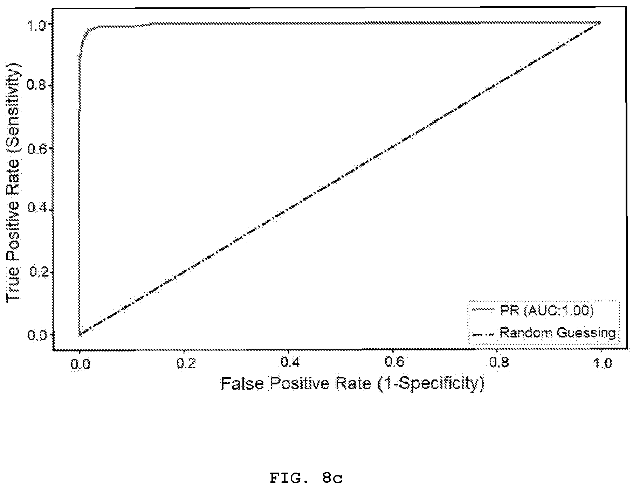

FIG. 8 illustrates exemplary ROC curves and AUC values obtained after training on a small subset of images and labelled data where 10 (N - AUC: 1,00) and 12 represent the Random Guessing.

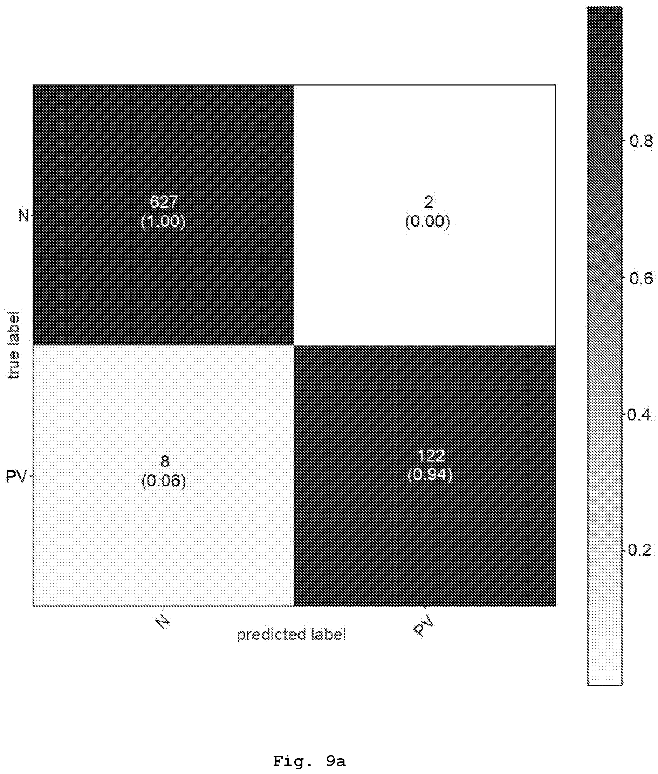

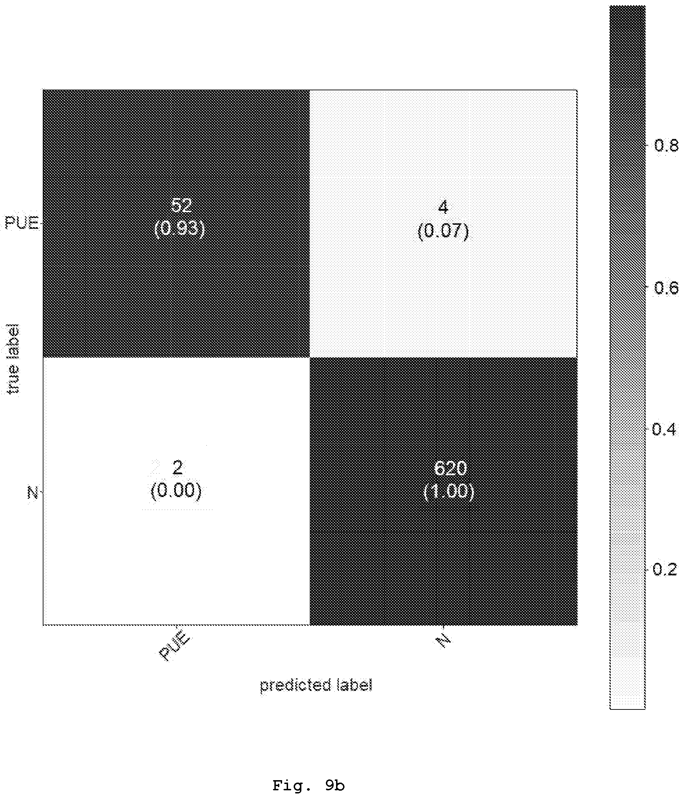

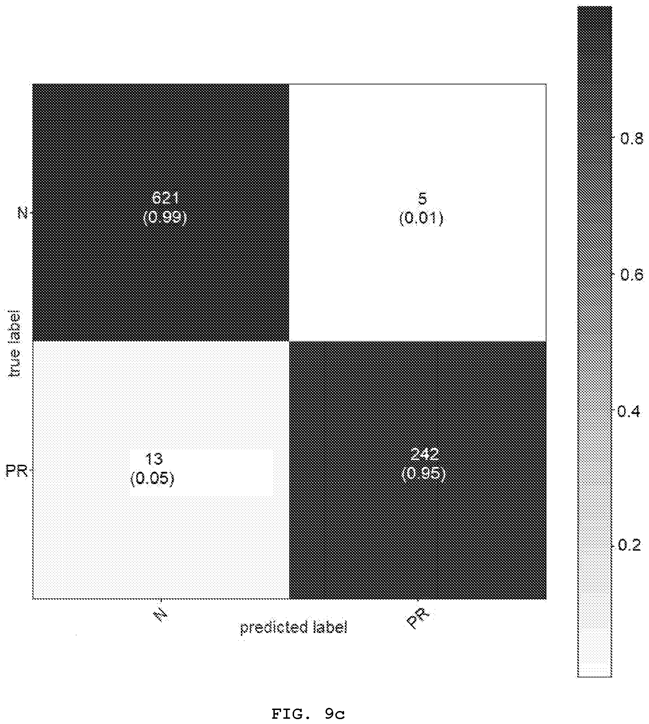

FIG. 9 illustrates an exemplary confusion matrix after training on a small subset of images and labelled data. Results used for model selection. Number of images of the small subset of data and respective class proportion between parentheses.

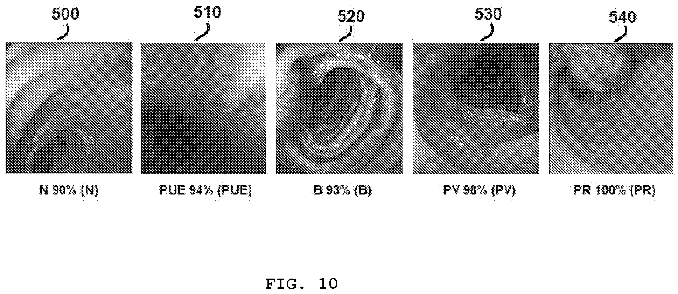

Fig 10 shows examples of lesion classification according to an embodiment of the present invention, where in 500 there is no lesion; in 510 there is a ulcer/erosion; in 520 there is blood/hematic traces; in 530 there is a vascular lesion; in 540 there is a protruding lesion.

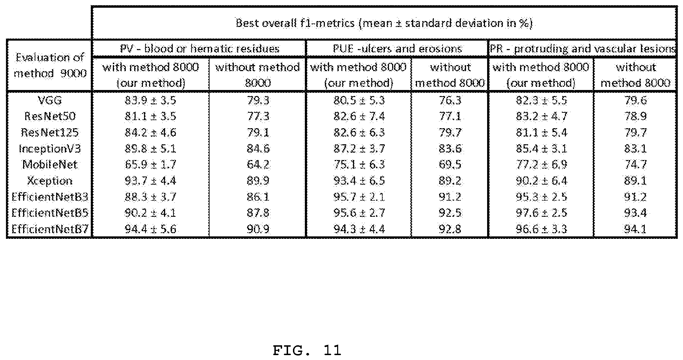

Fig 11 shows a result of performing deep learning-based lesion classification on the data volume 240 and 250, according to an embodiment of the present invention. The results of esophageal, stomach, small bowel and colon lesions classification, using the training method 8000 of the present invention are significantly improved as compared to the results using the existing methods (without method 8000) .

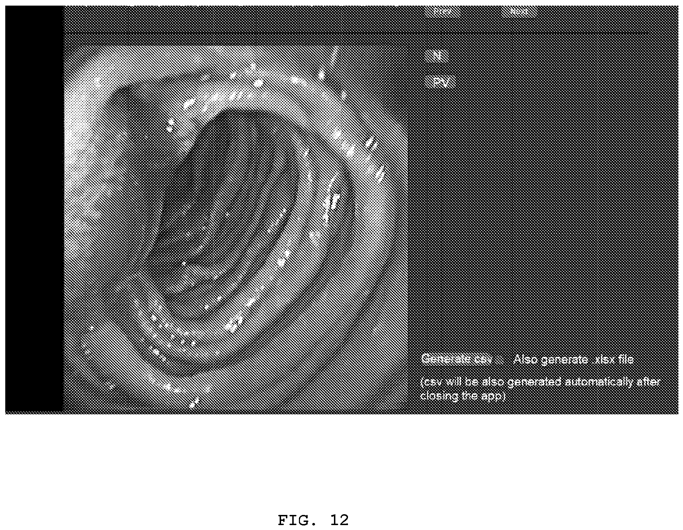

Fig 12 shows an example of a classified lesion waiting for validation by the output collector module 7000. By another neuronal network or any other computational system adapted to perform the task, physician expert in gastroenterological imagery identifies esophageal, stomach, small bowel and colon lesions, analyzing the labelled image classified by the deep model 140. Options for image reclassification on the last layer of the classification network 100 are depicted in figure 5. Optionally, confirmation or reclassification are sent to the storage module.

## Claims

1. A computer-implemented method capable of automatically detecting and differentiating esophageal, stomach, small bowel and colon lesions in device-assisted enteroscopy images by classifying the pixels as esophageal, stomach, small bowel and colon lesions, comprising selecting the architecture combination and fully training such architecture for esophageal, stomach, small bowel and colon lesions with means of output validation and storage capabilities wherein the method:
- selects a number of subsets of all endoscopic ultrasonography images/videos, each of said subsets considering only images from the same patient;
- selects another subset as validation set, wherein the subset does not overlap chosen images on the previously selected subsets;
- pre-trains (8000) of each of the chosen subsets with one of a plurality of combinations of image feature extraction component, followed by a subsequent classification neural network component for pixel classification as esophageal, stomach, small bowel and colon lesions wherein said pre-training;
- early stops when the scores do not improved over a given number of epochs, namely three;
- evaluates the performance of each of the combinations;
- is repeated on new, different subsets, with another networks combination and training hyperparameters, wherein such new combination considers a higher number of dense layers if the f1-metric is low and fewer dense layers if the f1-metric suggests overfitting;
- selects (400) the architecture combination that performs best during pre-training;
- fully trains and validates (9000) the selected architecture combination using the entire set of device-assisted enteroscopy images to obtain an optimized architecture combination for each classification;
- predicts (6000) esophageal, stomach, small bowel and colon lesions using said optimized architecture combination for classification;
- receives the classification output (270) of the prediction module (6000) by an output collect module (7000) with means of communication to a third-party capable of performing validation of said network classification;
- stores the corrected prediction into the storage component (2000).

2. The method of claim 1, wherein the pre-training (8000) is performed dividing and selecting the entire device-assisted enteroscopy images cohort into a predefined amount of folds, wherein said given patient specific images are contained in one and one only fold.

3. The method of claim 1, wherein the classification network architecture comprises at least two blocks, each having a Dense layer followed by a Dropout layer.

4. The method of claims 1 and 3, wherein the last block of the classification component includes a BatchNormalization layer followed by a Dense layer where the depth size is equal to the number of lesions type one desires to classify.

5. The method of claim 1, wherein the set of pre-trained neuronal networks is the best performing among the following: VGG16, InceptionV3, Xception, EfficientNetB5, EfficientNetB7, Resnet50 and Resnet125.

6. The method of claims 1 and 5, wherein the best performing combination is chosen based on the overall accuracy and on the f1-metrics.

7. The method of claims 1 and 5, wherein the training of the best performing combination comprises two to four dense layers in sequence, starting with 4096 and decreasing in half up to 512.

8. The method of claims 1, 5 and 7, wherein between the final two layers of the best performing combination there is a dropout layer of 0.1 drop rate.

9. The method of claim 1, wherein the training of the samples includes a ratio of training-to-validation of 10%-90%.

10. The method of claim 1, wherein the validation of the network output is achieved by interpreting the accuracy of the classification output and of correcting a wrong prediction, wherein the third-party comprises at least one of: another neuronal network, any other computational system adapted to perform the validation task or, optionally, a physician expert in gastroenterological imagery;

11. The method of claim 10, wherein the third-party validation is done by user-input.

12. The method of claim 1 wherein the training dataset includes images in the storage component (2000) that were predicted sequentially performing the steps of such method.

13. A portable endoscopic device comprising instructions which, when executed by a processor, cause the computer to carry out the steps of the method of claims 1-12.

## Patentansprüche

1. Computerimplementiertes Verfahren zur automatischen Erkennung und Unterscheidung von Läsionen an Speiseröhre, Magen, Dünndarm und Dickdarm auf bei einer device-assistierten Enteroskopie angefertigten Aufnahmen, indem die Pixel als Läsionen an Speiseröhre, Magen, Dünndarm und Dickdarm klassifiziert werden, darunter die Auswahl der Architekturkombination und das vollständige Trainieren einer solchen Architektur für Läsionen an Speiseröhre, Magen, Dünndarm und Dickdarm durch Output-Validierung und Speicherfähigkeiten, **dadurch gekennzeichnet, dass** es:
- eine Anzahl von Subsets aller endoskopischen Ultraschallbilder/-videos auswählt, wobei jede dieser Subsets nur Aufnahmen desselben Patienten berücksichtigt;
- ein weiteres Subset zur Validierung auswählt, wobei dieses Subset nicht die ausgewählten Aufnahmen der zuvor ausgewählten Subsets enthalten darf;
- (8000) sämtliche ausgewählten Subsets mit einer von mehreren Kombinationen von Komponenten zur Extraktion von Bildmerkmalen, gefolgt von einer nachfolgenden Klassifizierung von Komponenten neuronaler Netzwerke zur pixelbasierten Klassifizierung in Läsionen an Ösophagus, Magen, Dünndarm und Dickdarm vor-trainiert, wobei das Vor-Training;
- vorzeitig stoppt, wenn sich die Punktzahl über eine gewisse Anzahl von Zeiträumen, nämlich drei, nicht verbessert hat;
- die Leistung jeder der Kombinationen bewertet;
- bei neuen, anderen Subsets mit einer anderen Kombination von Netzwerken und anderen Trainings-Hyperparametern wiederholt wird, wobei eine solche neue Kombination eine höhere Anzahl dichter Schichten berücksichtigt, wenn die F1-Metrik gering ist und weniger dichte Schichten, wenn die F1-Metrik auf ein Overfitting hindeutet;
- (400) die Architekturkombination auswählt, die beim Vor-Training am besten abgeschnitten hat;
- (9000) die ausgewählte Architekturkombination mithilfe des gesamten Sets der bei der device-assistierten Enteroskopie angefertigten Aufnahmen zum Erhalt einer optimierten Architekturkombination für jede Klassifizierung voll trainiert und validiert;
- (6000) Läsionen an Speiseröhre, Magen, Dünn- und Dickdarm unter Verwendung der optimierten Architekturkombination zur Klassifizierung prognostiziert;
- den Output der Klassifizierung (270) des Prognosemoduls (6000) durch ein Ausgabesammelmodul (7000) als Instrument zur Kommunikation mit Dritten empfängt, welche die Validierung der Netzklassifizierung durchführen können;
- die korrigierte Prognose in der Speicherkomponente (2000) speichert.

2. Das Verfahren nach Anspruch 1, **dadurch gekennzeichnet, dass** das Vor-Training (8000) so durchgeführt wird, indem die gesamte Kohorte der bei der device-assistierten Enteroskopie angefertigten Aufnahmen in eine vordefinierte Anzahl von Falten unterteilt und ausgewählt wird, wobei die gegebenen patientenspezifischen Bilder in nur einer einzigen Falte enthalten sind.

3. Das Verfahren nach Anspruch 1, **dadurch gekennzeichnet, dass** die Architektur des Klassifizierungsnetzwerkes mindestens zwei Blöcke umfasst, die jeweils einen Dense Layer mit anschließendem Dropout Layer aufweisen.

4. Das Verfahren nach Ansprüchen 1 und 3, **dadurch gekennzeichnet, dass** der letzte Block der Klassifizierungskomponente eine Batch Normalization Layer mit anschließender Dense Layer enthält, wobei die Tiefengröße der Anzahl der zu klassifizierenden Läsionstypen entspricht.

5. Das Verfahren nach Anspruch 1, **dadurch gekennzeichnet, dass** das Set aus vor-trainierten neuronalen Netzwerken sich hierbei als das leistungsfähigste unter den folgenden erwiesen hat:
VGG16, InceptionV3, Xception, EfficientNetB5, EfficientNetB7, Resnet50 and Resnet125.

6. Das Verfahren nach Ansprüchen 1 und 5, **dadurch gekennzeichnet, dass** die leistungsfähigste Kombination im Hinblick auf die Gesamtgenauigkeit und die F1-Metrik gewählt wird.

7. Das Verfahren nach Ansprüchen 1 und 5, **dadurch gekennzeichnet, dass** das Training der leistungsfähigsten Kombination zwei bis vier Dense Layers in Folge umfasst, die bei 4096 beginnen und dann um die Hälfte bis auf 512 abnehmen.

8. Das Verfahren nach Ansprüchen 1, 5 und 7, **dadurch gekennzeichnet, dass** sich zwischen den beiden letzten Layers der leistungsfähigsten Kombination eine Dropout Layer mit einer Dropout-Rate von 0,1 befindet.

9. Das Verfahren nach Anspruch 1, **dadurch gekennzeichnet, dass** beim Training der Proben auf ein Verhältnis von Training zu Validierung von 10 % bis 90 % gesetzt wird.

10. Das Verfahren nach Anspruch 1, **dadurch gekennzeichnet, dass** die Validierung des Netzwerk-Outputs durch die Interpretation der Genauigkeit des Outputs der Klassifizierung und durch die Korrektur einer falschen Prognose erzielt wird, wobei die Validierung durch Dritte entweder durch ein anderes neuronales Netzwerk, ein beliebiges anderes Computersystem, das für die Durchführung der Validierungsaufgabe geeignet ist, oder optional durch einen Arzt, der Experte für gastroenterologische Bilddiagnostik ist, durchzuführen ist;

11. Das Verfahren nach Anspruch 10, **dadurch gekennzeichnet, dass** die Validierung durch Dritte mithilfe von Benutzereingaben erfolgt.

12. Das Verfahren nach Anspruch 1, **dadurch gekennzeichnet, dass** der Trainingsdatensatz Bilder in der Speicherkomponente (2000) umfasst, die nacheinander bei der Durchführung der Schritte eines solchen Verfahrens vorhergesagt wurden.

13. Tragbares Endoskop, das Befehle enthält, die bei Ausführung durch einen Prozessor den Computer veranlassen, die Schritte des Verfahrens nach Ansprüchen 1 bis 12 vorzunehmen.

## Revendications

1. Procédé mis en œuvre par ordinateur capable de détecter et de différencier automatiquement les lésions de l'œsophage, de l'estomac, de l'intestin grêle et du côlon, sur des images d'endoscopie digestive assistée par un dispositif, à travers la classification des pixels en lésions de l'oesophage, de l'estomac, de l'intestin grêle et du côlon, comprenant la sélection de la combinaison de l'architecture et l'entraînement complet d'une telle architecture pour les lésions de l'oesophage, de l'estomac, de l'intestin grêle et du côlon avec des moyens de validation des résultats et des capacités de stockage, où le procédé :
- sélectionne un certain nombre de sous-ensembles de toutes les images/vidéos d'échographie endoscopique, chacun desdits sous-ensembles considérant seulement les images d'un même patient;
- sélectionne un autre sous-ensemble en tant qu'ensemble de validation, qui ne chevauche pas les images choisies dans les sous-ensembles précédemment sélectionnés;
- pré-entraîne (8000) chacun des sous-ensembles choisis avec une combinaison de composant d'extraction de caractéristiques d'image parmi une pluralité de ces combinaisons, suivi d'un composant de réseau neuronal de classification ultérieure pour la classification des pixels en lésions de l'oesophage, de l'estomac, de l'intestin grêle et du côlon, où ledit pré-entraînement:
- s'arrête dès lors que les scores ne s'améliorent pas sur un certain nombre d'époques, à savoir trois;
- évalue les performances de chacune des combinaisons;
- est répété sur de nouveaux sous-ensembles différents, avec une autre combinaison de réseaux et des hyperparamètres d'entraînement, où cette nouvelle combinaison considère un nombre plus élevé de couches denses si la métrique f1 est basse et moins de couches denses si la métrique f1 suggère un surajustement;
- sélectionne (400) la combinaison d'architecture qui présente la meilleure performance pendant le pré-entraînement ;
- entraîne et valide entièrement (9000) la combinaison d'architecture sélectionnée en utilisant l'ensemble complet d'images d'endoscopie digestive assistée par un dispositif, afin d'obtenir une combinaison d'architecture optimisée pour chaque classification;
- prédit (6000) des lésions de l'oesophage, de l'estomac, de l'intestin grêle et du côlon en utilisant ladite combinaison d'architecture optimisée pour la classification;
- reçoit les résultats de classification (270) du module de prédiction (6000) par le biais d'un module de collecte des résultats (7000), avec des moyens de communication avec un tiers capable d'effectuer la validation de ladite classification du réseau;
- stocke la prédiction corrigée dans le composant de stockage (2000).

2. Procédé, selon la revendication 1, dans lequel le pré-entraînement (8000) est effectué en divisant et en sélectionnant la cohorte entière d'images d'endoscopie digestive assistée par un dispositif dans une quantité prédéfinie de plis, où lesdites images spécifiques du patient sont contenues dans un seul et même pli.

3. Procédé, selon la revendication 1, dans lequel l'architecture du réseau de classification comprend au moins deux blocs ayant chacun une couche Dense suivie d'une couche de Dropout.

4. Procédé, selon les revendications 1 et 3, dans lequel le dernier bloc du composant de classification comprend une couche de BatchNormalization suivie d'une couche Dense où la profondeur est égale au nombre de types de lésions que l'on souhaite classifier.

5. Procédé, selon la revendication 1, dans lequel l'ensemble de réseaux neuronaux pré-entraînés présente la meilleure performance parmi les suivants: VGG16, InceptionV3, Xception, EfficientNetB5, EfficientNetB7, Resnet50 et Resnet125.

6. Procédé, selon les revendications 1 et 5, dans lequel la combinaison qui présente la meilleure performance est choisie en fonction des métriques de la précision globale et de f1.

7. Procédé, selon les revendications 1 et 5, dans lequel l'entraînement de la combinaison qui présente la meilleure performance comprend deux à quatre couches denses en séquence, commençant par 4096 et diminuant de moitié jusqu'à 512.

8. Procédé, selon les revendications 1, 5 et 7, dans lequel entre les deux couches finales de la combinaison qui présente la meilleure performance se trouve une couche de Dropout d'un taux d'abandon de 0,1.

9. Procédé, selon la revendication 1, dans lequel l'entraînement des échantillons comprend un rapport entraînement/validation de 10 % à 90 %.

10. Procédé, selon la revendication 1, dans lequel la validation des résultats du réseau est obtenue en interprétant l'exactitude des résultats de classification et en corrigeant une prédiction erronée, où le tiers comprend au moins l'un des éléments suivants : un autre réseau neuronal, tout autre système informatique adapté pour réaliser la tâche de validation ou, éventuellement, un médecin expert en imagerie gastro-entérologique.

11. Procédé, selon la revendication 10, dans lequel la validation par un tiers est effectuée par saisie (input) de l'utilisateur.

12. Procédé, selon la revendication 1, dans lequel l'ensemble de données d'entraînement comprend des images dans le composant de stockage (2000) qui ont été prédites en exécutant séquentiellement les étapes d'un tel procédé.

13. Dispositif endoscopique portable **caractérisé en ce qu'**il comprend des instructions qui, lorsqu'elles sont exécutées par un processeur, amènent l'ordinateur à exécuter les étapes du procédé des revendications 1 à 12.
